# FASCICULE DE BREVET EUROPEEN

(11) **EP 1 431 856 B1**
(45) Date de publication et mention de la délivrance du brevet: **14.06.2006**
(21) Numéro de dépôt: 03078612.3
(22) Date de dépôt: 18.11.2003
(51) Int. Cl.: G05D 7/06, G01F 1/00

(54) **Canal de mesure associé à une vanne de régulation de débits motorisée et à un capteur de niveau**
Messkanal in Verbindung mit einem motorbetätigten Durchfluss-Regelventil und einem Füllstandsensor
Measuring channel associated with a motor operated flow control valve and a level sensor

(30) Priorité: 21.11.2002 FR 0214701
(43) Date de publication de la demande: 23.06.2004
(73) Titulaire: S.A.S. Saint Dizier Environnement, 59147 Gondecourt (FR)
(72) Inventeur: Viau, Jean-Yves, 59830 Cysoing (FR); Preuvot, Didier, 59493 Villeneuve d'Ascq (FR); Munerez, Jean-Claude, 52130 Wassy (FR)
(74) Mandataire: Gérardin, Robert Jean René

(56) Documents cités:
- DE-A- 1 773 711
- DE-A- 4 007 282
- US-A- 4 671 119
- US-A- 5 091 863
- US-A- 5 321 601

## Description

L'invention concerne un dispositif de régulation de débits, constitué principalement d'un canal de mesure associé à une vanne de régulation de débits motorisée et à un capteur de niveau, destiné à assurer la maîtrise des débits au sein des réseaux d'assainissement.

La maîtrise des débits en réseau unitaire est souvent assurée par la mise en oeuvre de régulateurs de débits à flotteur. Leurs réponses hydrauliques sont souvent bonnes, mais ils restent très sensibles au colmatage, dès que la section de l'orifice est inférieure à 150 mm, c'est-à-dire pour des débits régulés inférieurs à 15, voire 20 l/s, en fonction de la hauteur d'eau analysée à l'amont du dispositif. Le brevet français n° 91 05013 du 17 avril 1991 illustre un type de régulateur de débits à flotteur.

Les modèles à effet vortex, ne comprenant pas d'éléments mobiles, peuvent améliorer cette fiabilité, mais la régulation reste imprécise, et ils ne répondent pas à des débits inférieurs à 10, voire 15 l/s, sur le plan de la section de l'orifice.

Une solution existe avec la mise en oeuvre d'une vanne motorisée, actionnée en fonction du débit mesuré à l'aval au sein d'un canal de mesure (venturi, seuil...). Cependant, la mise en oeuvre de cette solution reste lourde techniquement et financièrement, notamment pour les petites collectivités. En effet, l'encombrement du canal de mesure et les conditions d'implantation sont très contraignants sur le dimensionnement de l'ouvrage de régulation.

Une solution simplifiée est parfois mise en oeuvre, mais implique le positionnement de deux capteurs de mesure à l'amont et à l'aval de la vanne. L'écart enregistré entre les deux hauteurs mesurées assure l'asservissement d'une vanne motorisée. Cependant, cette technique implique une vanne de section faible, notamment pour les petits débits, et s'avère peu fiable sur la qualité du débit régulé.

Les principaux inconvénients des solutions ci-dessus évoquées sont une trop faible section de l'orifice de régulation, une technologie lourde pour la technique basée sur une mesure du débit régulé, ou une imprécision trop grande sur la maîtrise du débit restitué.

On connaît, par le brevet allemand DE-A-1 773 711, un dispositif de mesure de débit comportant un canal de mesure associé à un capteur de niveau, destiné à mesurer des débits au sein des réseaux d'assainissement. Le canal de mesure de forme oblongue est associé à une chambre latérale dans laquelle le dispositif de mesure de niveau est situé. Un venturi placé dans ledit canal de mesure détermine le débit, mais uniquement avec des écoulements libres et, par conséquent, non turbulents. Cette technique n'est donc pas adaptée à la mesure de débit avec mise en charge du réseau amont, car dans ce cas, la mise en oeuvre d'un canal à venturi ne peut s'envisager qu'avec une absorption d'énergie en amont permettant de tranquilliser l'effluent en vue de permettre la mesure et donc la régulation du débit restitué, telle qu'une chute d'eau au sein d'un regard, toujours très délicate à mettre en oeuvre sur un réseau d'assainissement ou par écoulement en conduite sur une grande longueur avant d'atteindre le canal à venturi, ce qui s'oppose donc à toute compacité de l'ouvrage et à la fiabilité de la régulation quels que soient les débits.

On connaît aussi, par le brevet US 5,091,863, un dispositif et un procédé de mise en oeuvre d'un appareil de prélèvement automatique et de mesure de débit de liquide, utilisant la mesure de hauteurs d'eau à l'amont d'un canal en V constituant l'élément déprimogène. Il ne s'agit nullement d'un dispositif de régulation de débit puisqu'il n'est combiné à aucun moyen permettant de contrôler celui-ci dont on assure uniquement le suivi par enregistrement séquentiel en faisant appel à des moyens électroniques à microprocesseur d'enregistrement de stockage et de transfert des données dans un contexte de gestion. Cette technique n'est donc nullement destinée à la régulation de débit avec mise en charge du réseau amont.

La présente invention a pour but de remédier à ces inconvénients. Cette invention, telle qu'elle est caractérisée dans les revendications, résout le problème consistant à créer un canal de mesure permettant d'absorber la pression d'eau en amont de la vanne de régulation, c'est-à-dire assurant une hauteur d'eau constante pour une valeur de débit donnée intégrant, de ce fait, les fluctuations d'énergie engendrées par la mise en charge, à l'amont, de la vanne, et autorisant une grande section de l'orifice de passage de la vanne de régulation, assurant une grande fiabilité vis-à-vis du risque de colmatage : un éventuel colmatage en cours de régulation entraînant l'ouverture complète de la vanne.

Les avantages obtenus, grâce à cette invention, consistent en :
- une grande compacité, notamment au regard des contraintes liées aux canaux de mesure de type venturi,
- un niveau d'eau constant au sein du canal de mesure dès l'obtention du débit nominal, et ceci, même avec la mise en charge de la chambre située à l'amont de la vanne de régulation, ce qui simplifie l'instrumentation et la programmation des automatismes,
- une grande fiabilité en fonctionnement, liée aux sections libres importantes de la vanne de régulation et du canal de mesure,
- la restitution d'un débit régulé avec une bonne précision et, ceci, même pour de faibles hauteurs d'eau, par opposition à la hauteur d'eau présente à l'amont de la vanne de régulation.

D'autres caractéristiques et avantages apparaîtront dans la description qui va suivre d'un mode de réalisation de l'invention appliqué à un bassin d'orage, donné à titre d'exemple non limitatif, au regard des dessins annexés, sur lesquels :
- la figure 1 représente une vue de dessus en perspective du canal de mesure,
- la figure 2 représente une vue de face du déversoir d'orage,
- la figure 3 représente une vue de côté, en coupe selon AA, du déversoir d'orage, selon la figure 2,
- la figure 4 représente une vue de dessus du déversoir d'orage, selon la figure 2,
- la figure 5 représente une vue de dessus en perspective du canal de mesure selon la figure 1, associé à une vanne de régulation motorisée.

Selon cet exemple, le déversoir d'orage équipé du dispositif de régulation de débits **10**, conforme à l'invention, comporte une structure bétonnée **20** comprenant une chambre de déversement **21** et une chambre de contrôle de débits **22**, équipées respectivement, d'un capteur de niveau **23** mesurant le niveau de la surverse **24** et d'un capteur de niveau **25** mesurant le niveau de l'écoulement assuré dans un canal de mesure **11** de forme octogonale, dont le fond **12** est muni d'une chicane **13**, de forme générale trapézoïdale, à partie supérieure convexe **131** et à partie amont concave **132**, relié à une vanne de régulation **14** équipée d'un servo-moteur **15** ; le fonctionnement de l'ensemble étant assuré par une armoire de commande **16**.

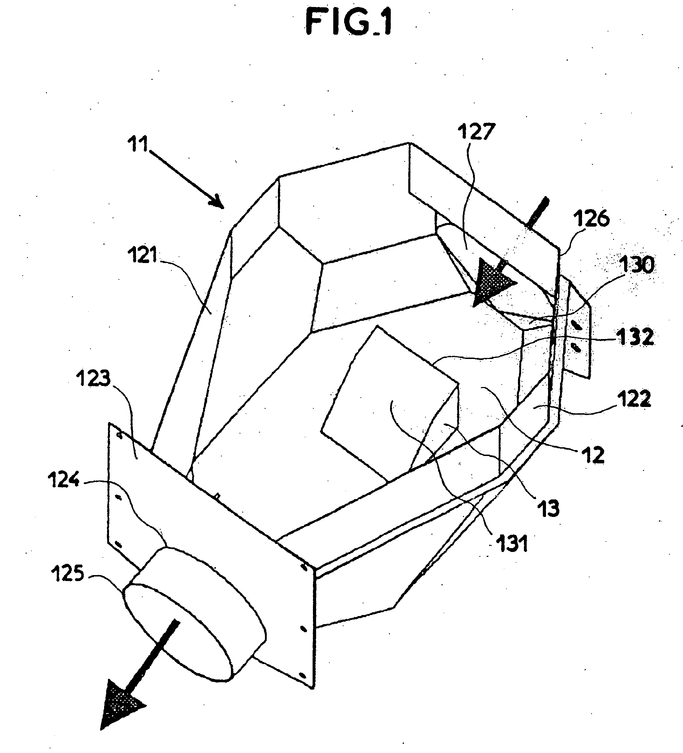

En examinant plus en détail la figure 1, on remarque que le canal de mesure **11** est délimité, vers le bas, par un fond plat **12**, de forme octogonale irrégulière, comportant, dans le plan médian longitudinal, une chicane **13** de section longitudinale trapézoïdale à partie supérieure convexe **131** et à partie amont concave **132**, sur les côtés, par des parois polygonales **121** et **122**, et, sur l'avant et l'arrière, respectivement par une plaque **123**, percée d'un orifice cylindrique **124** prolongé vers l'avant par un conduit **125**, et par une platine **126**, comportant un orifice cylindrique **127** muni, à sa partie inférieure, d'un diaphragme en V **130**, sur la face externe de laquelle se fixe coaxialement une vanne de régulation **14** à ouverture contrôlée par un servo-moteur **15** (non représentée sur cette figure).

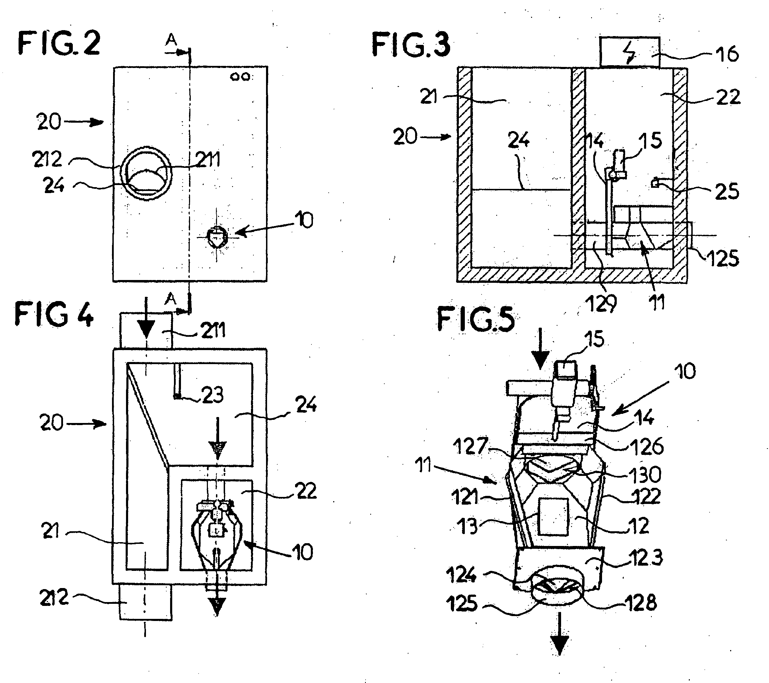

En se rapportant maintenant successivement aux figures 2 à 4, on remarquera, tout d'abord, que la chambre de déversement **21** de la structure bétonnée **20**, représentée sur la figure 2, est munie, sur l'arrière, d'un conduit de déversement **211** et, sur l'avant, d'un conduit d'écoulement principal **212**, décalé vers le haut par rapport au conduit de déversement **211**, avec retenue, dans la chambre **21**, d'une surverse **24** dont le niveau est mesuré par un capteur **25**. On remarquera ensuite, sur les figures 3 à 5, que la surverse **24** est mise en communication avec le dispositif de régulation de débits **10** par l'intermédiaire d'un conduit **129**, raccordé à la vanne de régulation **14**, dont la section de passage est contrôlée par le servo-moteur **15**, piloté par le capteur de niveau **25**, disposé dans le plan médian longitudinal du canal de mesure **11**, en aval de la chicane **13**, en respectant une valeur de consigne prédéterminée en fonction du débit nominal que l'on désire obtenir et maintenir ; les orifices cylindriques d'entrée **127** et de sortie **124** étant chacun muni, dans cet exemple, d'un diaphragme en V **128**, **130** ; le conduit **125** traversant la face avant de la chambre de contrôle de débits **22** pour être raccordé plus loin au conduit d'écoulement principal **212**, dans lequel il assure un débit minimum permanent, même lorsque le niveau de la surverse **24** descend en dessous de la génératrice inférieure du conduit de déversement **211** ; étant précisé que d'autres types de diaphragme, figurant dans l'état de la technique, peuvent être utilisés selon les cas, en fonction du débit à assurer.

Ainsi, la vanne de régulation de débits **14**, d'un diamètre minimal de 150 ou 200 mm, est mise en oeuvre en amont du canal de mesure **11** par l'intermédiaire du servo-moteur **15** asservi au capteur de niveau **25**, afin d'assurer, dans le canal de mesure **11**, un plan d'eau de niveau constant, quelle que soit la hauteur d'eau de la surverse **24** à l'amont de la vanne **14**, pour un débit nominal fixe.

En fonction de la hauteur mesurée par le capteur de niveau **25**, la section de passage assurée par la vanne de régulation **14** sera donc accrue ou réduite. Ainsi, les débits de temps sec inférieurs au débit nominal initialement choisi, conduisent à une ouverture maximale de la vanne de régulation **14**, assurant ainsi la fiabilité du système de régulation de débits **10**. De même, tout colmatage, détecté pour une faible hauteur d'eau par le capteur de niveau **25**, conduit à une ouverture complète de la vanne de régulation **14**.

Le fonctionnement de l'ensemble de l'installation est assuré par une armoire de commande **16**, reliée au servo-moteur **15** de la vanne de régulation **14** et aux capteurs de niveau **23** et **25**.

Le dispositif, selon l'invention, est destiné principalement à la maîtrise des débits au sein des réseaux d'assainissement, notamment en réseau unitaire, mais également en réseau séparatif. Les faibles débits sont assurés avec une très grande fiabilité, basée sur une grande section libre et un canal de mesure spécifique.

Ce dispositif pourra se monter, notamment, au sein des déversoirs d'orage, ou à l'aval des bassins d'orage ou de rétention.

## Revendications

1. Dispositif de régulation de débits **(10),** destiné à assurer la maîtrise des débits au sein des réseaux d'assainissement, comportant un canal de mesure **(11)** de forme oblongue, à orifices cylindriques d'entrée **(127)** et de sortie (**124**), à diaphragme en V **(128** et **130)** associé à une vanne de régulation de débits motorisée **(14)** montée sur l'orifice cylindrique d'entrée **(127)** et à un capteur de niveau **(25)** disposé dans leplan médian longitudinal du canal de mesure **(11),** en amont du diaphragme en V (**128)** de sortie, dans lequel le canal de mesure **(11)** comporte, sur le fond **(12),** au moins une chicane **(13),** de forme générale prismatique, à partie supérieure convexe **(131)** et à partie amont concave **(132),** située en amont du capteur de niveau **(25),** déterminée de façon que les sections libres, au sein du canal de mesure **(11),** soient au moins égales à la section libre de l'orifice d'entrée **(127)** de la vanne de régulation de débits motorisée**(14).**

2. Dispositif selon la revendication 1, **caractérisé en ce que** les chicanes sont limitées à une seule, positionnée dans l'axe de l'écoulement.

## Claims

1. Flow regulation device (10) designed to manage the flows in sanitary networks, comprising an oblong measurement channel (11) with cylindrical inlet (127) and outlet (124) orifices, with a V-shaped diaphragm (128 and 130) associated with a motor-driven flow regulation valve (14) mounted on the cylindrical inlet orifice (127) and a level sensor (25) arranged in the longitudinal median plane of the measurement channel (11) upstream from the V-shaped outlet diaphragm (128), in which the measurement channel (11) comprises at the bottom (12) at least one chicane (13) of generally prismatic shape, with a convex upper part (131) and a concave upstream portion (132), located upstream from the level sensor (25), designed such that the free cross-sections in the measurement channel (11) are at least equal to the free cross-section of the inlet orifice (127) of the motor-driven flow regulation valve (14).

2. Device according to Claim 1, **characterised in that** the chicanes are limited to just one, positioned in the flow axis.

## Patentansprüche

1. Durchflussregeleinrichtung (10) zur Sicherstellung der Beherrschung des Durchflusses im Inneren von Kanainetzen mit einem Messkanal (11) von länglicher Form mit zylindrischen Eingangs- (127) und Ausgangsöffnungen (124), einer V-förmigen Blende (128 und 130), die mit einem an der zylindrischen Eingangsöffnung (127) angeordneten motorisierten Durchflussregelschieber (14) assoziiert ist, und einem in der mittleren Längsebene des Messkanals (11) angeordneten Füllstandssensor (25),stromauf von der V-förmigen Ausgangsblende (128), wobei der Messkanal (11) an seinem Grund (12) wenigstens ein Hindernis (13) von allgemein prismatischer Form mit einem oberen konvexen Teil (131) und einem stromauf gelegenen konkaven Teil (132), angeordnet stromauf vom Füllstandssensor (25), aufweist, dergestalt, dass die freien Querschnitte im Inneren des Messkanals (11) zumindestens gleich dem freien Querschnitt der Eingangsöffnung (127) des motorisierten Durchflussregelschiebers (14) sind.

2. Vorrichtung nach Anspruch 1, **dadurch gekennzeichnet, dass** die Hindernisse auf ein einziges beschränkt sind, das in der Ablaufachse angeordnet ist.
